# EUROPEAN PATENT APPLICATION

(11) **EP 4 572 080 A1**
(43) Date of publication of application: **18.06.2025**
(21) Application number: 24190618.9
(22) Date of filing: 24.07.2024
(51) Int. Cl.: H02J 7/00

(54) **BATTERY CHARGING CHAMBER**

(30) Priority: 14.12.2023 US 202363610283 P; 14.05.2024 CN 202410594408
(71) Applicant: Delta Electronics, Inc., Taoyuan City 33370 (TW)
(72) Inventor: Zeng, Zi-Wei, 32063 Taoyuan City (TW); Hsiao, Wei-Kai, 32063 Taoyuan City (TW); Chen, Chien-Hsun, 32063 Taoyuan City (TW)
(74) Representative: Uexküll & Stolberg

(57) **Abstract**

A battery charging chamber (1) is provided. The battery charging chamber (1) charges or discharges a battery (2). The battery charging chamber (1) includes a box (3), a cover (4) and a connector (5). The box (3) includes a first casing (31) and a chassis (32). The chassis (32) is disposed in a first accommodation space (311) of the first casing (31) for receiving the battery (2). The cover (4) includes a second casing (41), a first plate (42), a second plate (43) and an AC/DC conversion module (44). The first plate (42), the second plate (43) and the AC/DC conversion module (44) are disposed in a second accommodation space (411) of the second casing (41). The first plate (42) is made of metal and disposed between the second plate (43) and a bottom of the second casing (41). The second plate (43) includes a set of heat dissipation holes (431). The AC/DC conversion module (44) is disposed between the second plate (43) and the first plate (42). The box (3) and the cover (4) are pivotally connected with each other through the connector (5).

## Description

### FIELD OF THE INVENTION

The present disclosure relates to charging, and more particularly to a battery charging chamber.

### BACKGROUND OF THE INVENTION

The battery charging chamber includes a cover and a box. The cover is pivotally connected with the box. The box includes a concave for receiving the battery. When the battery needs to be charged, the battery charging chamber is in the open state. Namely, the box is not covered by the cover so as to expose the concave of the box. The battery is disposed in the concave of the box so as to be charged by the battery charging chamber. However, the power supply circuit of the conventional battery charging chamber is disposed in the box. Namely, the battery and the power supply circuit are disposed in the same component of the battery charging chamber (i.e., the box of the battery charging chamber). Consequently, the heat generated by the battery and the power supply circuit is all contained in the box. The battery receives the heat generated by the power supply circuit so as to reduce the lifespan of the battery. Moreover, the box of the battery charging chamber require additional channel and fan to exhaust the heat. The cost of the conventional battery charging chamber is increased, and the noise of the working fan is increased.

Therefore, there is a need of providing a battery charging chamber to obviate the drawbacks encountered from the prior arts.

### SUMMARY OF THE INVENTION

The present disclosure provides a battery charging chamber. The AC/DC conversion module of the battery charging chamber of the present disclosure is disposed in the second main accommodation space of the second casing of the cover. The battery is disposed in the chassis of the box of the battery charging chamber. Namely, the main heat source of the battery charging chamber (i.e., the AC/DC conversion module) and the battery are disposed two separable components of the battery charging chamber, respectively. Since the cover and the box are separate when the battery charging chamber receives the AC power, the battery does not receive the heat generated by the AC/DC conversion module so as to reduce the temperature of the battery charging chamber and enhance the lifespan of the battery. Moreover, the first plate of the battery charging chamber of the present disclosure is made of metal. The second plate includes at least one set of heat dissipation holes. The heat generated by the AC/DC conversion module adjacent to the first plate and the second plate is transmitted to the exterior of the battery charging chamber so as to enhance the heat dissipation ability of the AC/DC conversion module and the intensity of the cover. Furthermore, the battery charging chamber does not need a fan additionally so as to reduce manufacturing cost and noise.

In accordance with an aspect of the present disclosure, a battery charging chamber is provided. The battery charging chamber charges or discharges a battery. The battery charging chamber includes a box, a cover and a connector. The box includes a first casing and a chassis. The chassis is disposed in a first accommodation space of the first casing for receiving the battery. The cover includes a second casing, a first plate, a second plate and at least one AC/DC conversion module. The first plate, the second plate and the at least one AC/DC conversion module are disposed in a second accommodation space of the second casing. The first plate is made of metal and disposed between the second plate and a bottom of the second casing. The second plate includes at least one set of heat dissipation holes. The at least one AC/DC conversion module is disposed between the second plate and the first plate. The first casing of the box and the second casing of the cover are pivotally connected with each other through the connector.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic view illustrating the close operation of a battery charging chamber of the present disclosure;
FIG. 2 is a schematic view illustrating the open operation of the battery charging chamber of FIG. 1;
FIG. 3 is a schematic exploded view illustrating the components of a box of the battery charging chamber of FIG. 1;
FIG. 4 is a schematic exploded view illustrating the components of a cover of the battery charging chamber of FIG. 1;
FIG. 5 is a top view illustrating the box of the FIG. 1; and
FIG. 6 is a connection structure illustrating the internal wires of the battery charging chamber of FIG. 1.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

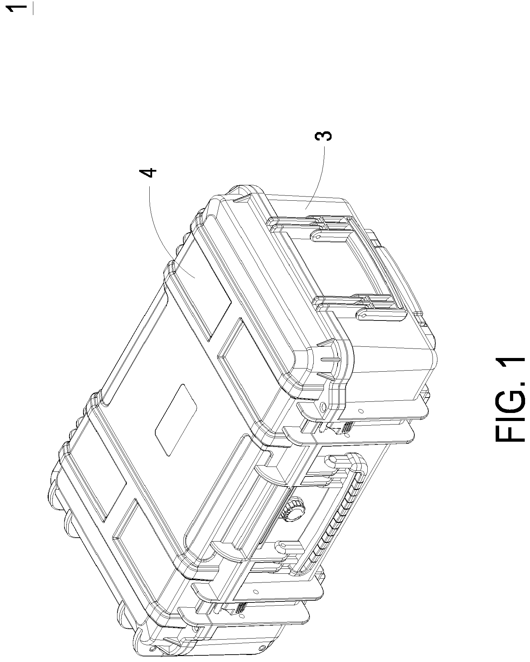

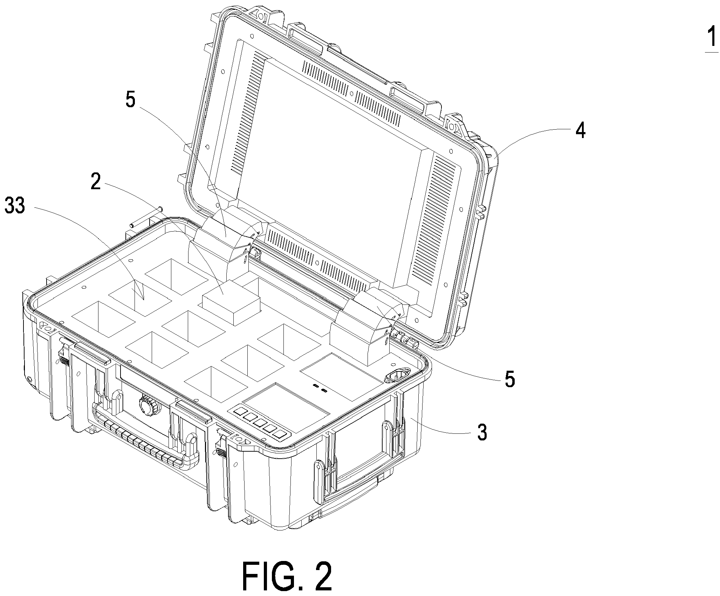

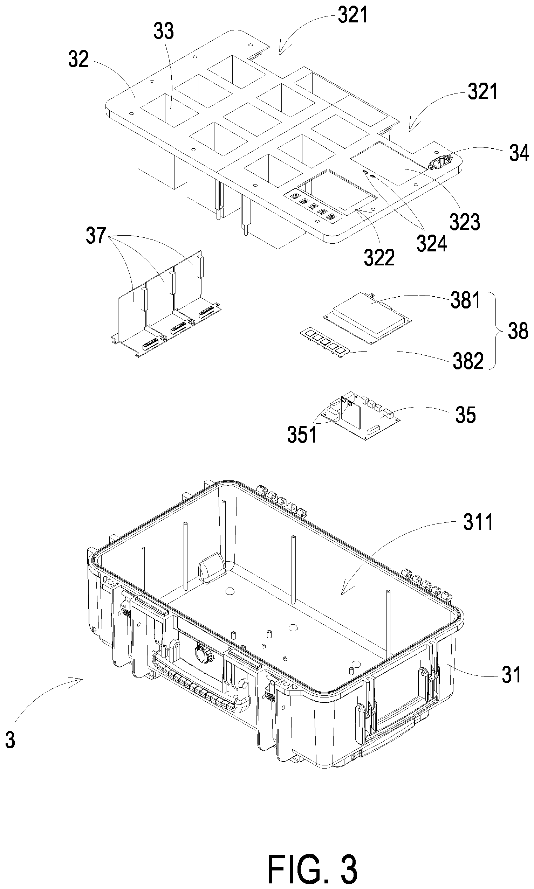

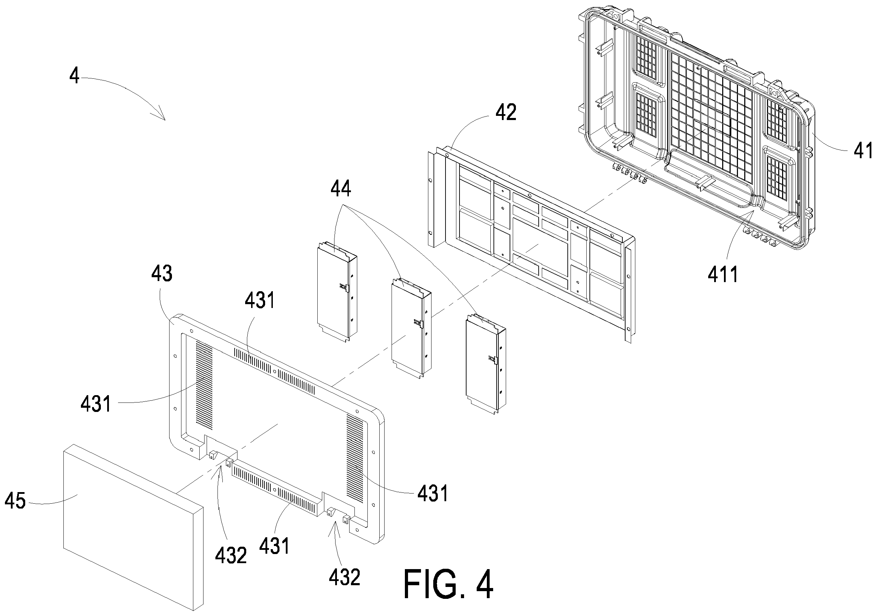

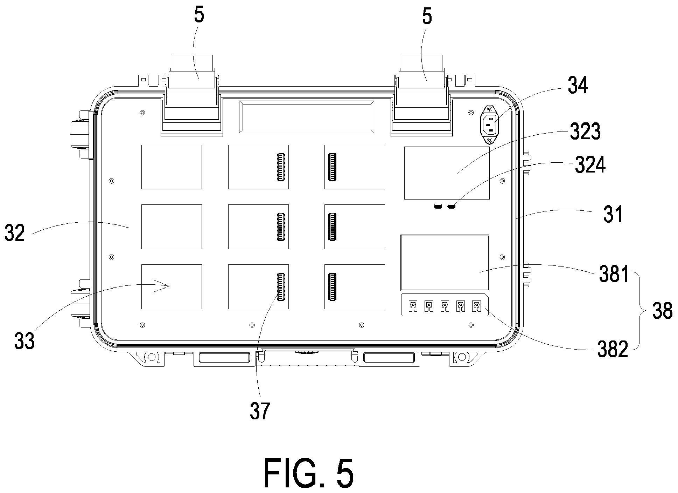

FIG. 1 is a schematic view illustrating the close operation of a battery charging chamber of the present disclosure. FIG. 2 is a schematic view illustrating the open operation of the battery charging chamber of FIG. 1. FIG. 3 is a schematic exploded view illustrating the components of a box of the battery charging chamber of FIG. 1. FIG. 4 is a schematic exploded view illustrating the components of a cover of the battery charging chamber of FIG. 1. FIG. 5 is a top view illustrating the box of the FIG. 1. As shown in FIG. 2, the battery charging chamber 1 charges the battery 2. In this embodiment, only one battery 2 is shown in FIG. 2. Certainly, the battery charging chamber 1 can receive more batteries 2, so that a plurality of batteries can be charged by the battery charging chamber 1 at the same time. The battery charging chamber 1 includes a box 3, a cover 4 and two connectors 5. When the battery charging chamber 1 is in the close operation, as shown in FIG. 1, the cover 4 covers the box 3 of the battery charging chamber 1 so as to cover the battery 2 disposed in the box 3. When the battery charging chamber 1 is in the open operation, as shown in FIG. 2, the cover 4 of the battery charging chamber 1 is pivotally connected with the box 3 through the two connectors 5, so that the cover 4 uncovers the box 3 so as to expose the battery 2. As shown in FIG. 3, the box 3 includes a first casing 31, a chassis 32, a plurality of receiving recesses 33, an input terminal 34, an AC circuit board 35, a plurality of DC/DC conversion module 37 and a control panel 38.

As shown in FIGS. 2, 3 and 5, the first casing 31 includes a first main accommodation space 311 having an opening. The chassis 32 is disposed in the first main accommodation space 311 of the first casing 31 and covers the opening of the first main accommodation space 311. The chassis 32 includes two chassis recesses 321, a first hole 322, a placement portion 323 and an output hole 324. Each chassis recess 321 is concaved from the lateral side of the chassis 32 adjacent to the cover 4. The first hole 322 runs through the chassis 32 and adjacent to one of the two chassis recesses 321. Hereinafter, the chassis recess 321 adjacent to the first hole 322 is referred to as first chassis recess 321, and the other chassis recess 321 is referred to as second chassis recess 321. The placement portion 323 is a recess to receive the document or the index. The placement portion 323 is disposed between the first chassis recess 321 and the first hole 322. The output hole 324 runs through the chassis 32 and disposed between the placement portion 323 and the first hole 322. Each receiving recess 33 is concaved from the upper surface of the chassis 32 toward the bottom of the first casing 31. Each receiving recess 33 is disposed in the first main accommodation space 311 of the first casing 31 for receiving the corresponding battery 2. In this embodiment, the number of the receiving recesses 33 is nine. The nine receiving recesses 33 are arranged in three rows and three columns. As shown in FIG. 2, the battery 2 is disposed in the receiving recess 33 located in the first row and the second column. The first hole 322 of the chassis 32 is adjacent to the receiving recess 33 located in the third row and the third column.

The input terminal 34 is disposed on the chassis 32 and adjacent to the first chassis recess 321 and the placement portion 323 for connecting and receiving the AC power provided by the external wire (not shown). The AC circuit board 35 is a control circuit board with USB Type-C connection functionality and disposed in the first main accommodation space 311 of the first casing 31. The AC circuit board 35 and the first chassis recess 321 are spatially corresponding in position to each other. In this embodiment, the AC circuit board 35 includes two output power sockets 351. The output power socket 351 is a socket with USB type-C. The output power socket 351 is exposed through the output hole 324 of the chassis 32 for connecting with the external electronic component and charging the external electronic component. Each DC/DC conversion module 37 is arranged in the bottom of the first casing 31 and disposed in the first main accommodation space 311 of the first casing 31. Each DC/DC conversion module 37 is arranged between the receiving recess 33 located in the first column and the receiving recess 33 located in the second column. For example, the first DC/DC conversion module 37 is disposed between the receiving recess 33 located in the first row and the first column and the receiving recess 33 located in the first row and the second column. The second DC/DC conversion module 37 is disposed between the receiving recess 33 located in the second row and the first column and the receiving recess 33 located in the second row and the second column. The third DC/DC conversion module 37 is disposed between the receiving recess 33 located in the third row and the first column and the receiving recess 33 located in the third row and the second column. The output terminal of each DC/DC conversion module 37 is penetrated through the side wall of the corresponding receiving recess 33 located in the first column and the side wall of the corresponding receiving recess 33 located in the second column so as to connect the battery 2 disposed in the corresponding receiving recess 33 for transmitting power to the corresponding battery 2. In other words, the DC/DC conversion module 37 only charges the batteries 2 disposed in the receiving recess 33 located in the first column and the second column, but not charge the batteries 2 disposed in the receiving recess 33 located in the third column. The control panel 38 is disposed on the chassis 32 and disposed in the first main accommodation space 311 of the first casing 31. The control panel 38 includes a monitor 381 and a human machine interface circuit 382. The monitor 381 shows the state of the battery charging chamber 1 or the state of the battery 2 disposed in the battery charging chamber 1. The human machine interface circuit 382 is used to control the charging or discharging operation by the user.

As shown in FIG. 4, the cover 4 includes a second casing 41, a first plate 42, a second plate 43, a plurality of AC/DC conversion modules 44 and a fixing foam 45. The second casing 41 of the cover 4 is pivotally connected with the first casing 31 of the box 3 through the two connectors 5, as shown in FIG. 2. As shown in FIG. 4, the second casing 41 includes a second main accommodation space 411. The first plate 42, the plurality of AC/DC conversion modules 44, the second plate 43 and the fixing foam 45 are arranged in the second main accommodation space 411 of the second casing 41 in sequence. The first plate 42 is made of metal, disposed on the bottom of the second casing 41 and disposed in the second main accommodation space 411. The second plate 43 is disposed in the second main accommodation space 411 of the second casing 41. The first plate 42 is disposed between the second plate 43 and the bottom of the second casing 41. The second plate 43 includes a plurality set of heat dissipation holes 431 and two plate recesses 432. In this embodiment, the heat dissipation holes 431 are arranged to four sets according to placement position. Four sets of the heat dissipation holes 431 are adjacent to the four side walls of the second casing 43, respectively. The extension direction of each set of heat dissipation holes 431 is parallel to the corresponding side wall of the second plate 43. Each plate recess 432 is concaved from the side wall of the second plate 43 adjacent to the box 3. The AC/DC conversion module 44 is served as the power supply circuit board of the battery charging chamber 1 and disposed between the first plate 42 and the second plate 43. In this embodiment, the number of the AC/DC conversion module 44 is three. The two AC/DC conversion modules 44 in left and right are adjacent to the two corresponding sets of heat dissipation holes 431 of the second plate 43. In this embodiment, the AC/DC conversion module 44 dissipates the heat through the first plate 42 made of metal by transmitting the heat, and the AC/DC conversion module 44 also dissipates the heat through the heat dissipation holes 431 of the second plate 43 by utilizing air convection. The fixing foam 45 is disposed in one side of the second plate 43 away from the AC/DC conversion module 44 for fixing the battery 2 disposed in the box 3 when the box 3 is covered by the cover 4 of the battery charging chamber 1.

As shown in FIGS. 1 and 2, the connector 5 is connected with one side of the box 3 and one side of the cover 4. The cover 4 is rotated relative to the connector 5, so that the cover 4 selectively covers or uncovers the box 3. When the battery charging chamber 1 is in the close operation, as shown in FIG. 1, the cover 4 is rotated relative to the connector 5 so as to cover the box 3. When the battery 2 needs to be charged by the battery charging chamber 1 and the battery charging chamber 1 is in the open operation, as shown in FIG. 2, the cover 4 is rotated relative to the connector 5 so as to uncover the box 3, so that the receiving recess 33 is exposed to receive the battery 2.

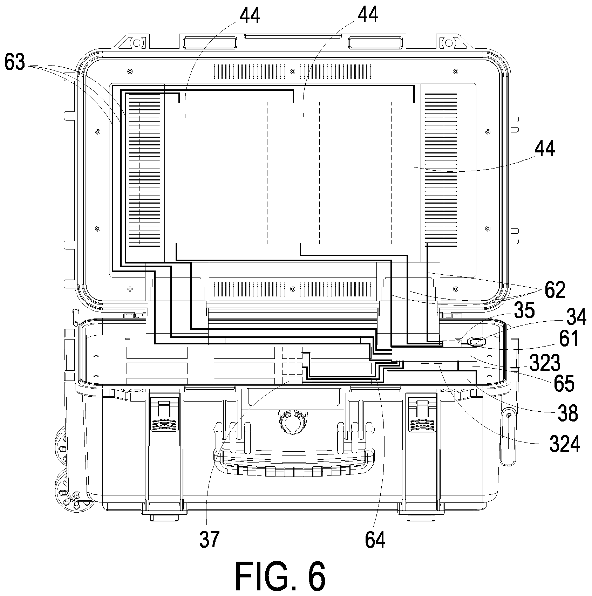

FIG. 6 is a connection structure illustrating the internal wires of the battery charging chamber of FIG. 1. As shown in FIG. 6, the battery charging chamber 1 includes a first wire 61, a plurality of second wires 62, a plurality of third wires 63, a plurality of fourth wires 64 and a fifth wire 65. The first wire 61 is connected between the input terminal 34 and the AC circuit board 35 for transmitting the AC power of the external wire received by the input terminal 34 to the AC circuit board 35. Each second wire 62 is connected between the AC circuit board 35 and the corresponding AC/DC conversion module 44 by one of the two connectors 5 (i.e., the connector 5 located in right side of FIG. 6), so that the AC power received by the AC circuit board 35 is transmitted to the corresponding AC/DC conversion module 44 to convert the AC power to a DC power. Each third wire 63 is connected between the corresponding AC/DC conversion module 44 and the AC circuit board 35 through the placement portion 323 of the chassis 32 by the other one of the two connectors 5 (i.e., the connector 5 located in left side of FIG. 6), so that the DC power is transmitted to the AC circuit board 35 to convert the DC power to a plurality of electric powers. Each fourth wire 64 is connected between the AC circuit board 35 and the corresponding DC/DC conversion module 37 through the placement portion 323 of the chassis 32, so that the plurality of electric powers provided by the AC circuit board 35 are transmitted to the corresponding DC/DC conversion module 37, respectively, for charging the battery 2 disposed in the corresponding receiving recess 33. The fifth wire 65 is connected between the AC circuit board 35 and the control panel 38 through the placement portion 323 of the chassis 32, so that the control panel 38 controls the AC circuit board 35 when the control panel 38 is pressed by the user.

As mentioned above, the AC/DC conversion module of the battery charging chamber of the present disclosure is disposed in the second main accommodation space of the second casing of the cover. The battery is disposed in the chassis of the box of the battery charging chamber. Namely, the main heat source of the battery charging chamber (i.e., the AC/DC conversion module) and the battery are disposed two separable components of the battery charging chamber, respectively. Since the cover and the box are separate when the battery charging chamber receives the AC power, the battery does not receive the heat generated by the AC/DC conversion module so as to reduce the temperature of the battery charging chamber and enhance the lifespan of the battery. Moreover, the first plate of the battery charging chamber of the present disclosure is made of metal. The second plate includes a plurality set of heat dissipation holes. The heat generated by the AC/DC conversion module adjacent to the first plate and the second plate is transmitted to the exterior of the battery charging chamber so as to enhance the heat dissipation ability of the AC/DC conversion module and the intensity of the cover. Furthermore, the battery charging chamber does not need a fan additionally so as to reduce manufacturing cost and noise.

## Claims

1. A battery charging chamber (1) for charging or discharging a battery (2), **characterized by** comprising:
a box (3) comprising a first casing (31) and a chassis (32), wherein the chassis (32) is disposed in a first accommodation space (311) of the first casing (31) for receiving the battery (2);
a cover (4) comprising a second casing (41), a first plate (42), a second plate (43) and at least one AC/DC conversion module (44), wherein the first plate (42), the second plate (43) and the at least one AC/DC conversion module (44) are disposed in a second accommodation space (411) of the second casing (41), the first plate (42) is made of metal and disposed between the second plate (43) and a bottom of the second casing (41), the second plate (43) comprises at least one set of heat dissipation holes (431), and the at least one AC/DC conversion module (44) is disposed between the second plate (43) and the first plate (42); and
a connector (5), wherein the first casing (31) of the box (3) and the second casing (41) of the cover (4) are pivotally connected with each other through the connector (5).

2. The battery charging chamber (1) according to claim 1, wherein the first plate (42), the at least one AC/DC conversion module (44) and the second plate (43) of the cover (4) are arranged in the second accommodation space (411) of the second casing (41) in sequence.

3. The battery charging chamber (1) according to claim 1, wherein the cover (4) further comprises a fixing foam (45) disposed in the second accommodation space (411) of the second casing (41) and disposed in one side of the second plate (43) away from the at least one AC/DC conversion module (44).

4. The battery charging chamber (1) according to claim 1, wherein the second cover (4) comprises four sets of heat dissipation holes (431), the four sets of heat dissipation holes (431) are adjacent to four side walls of the second plate (43), respectively, and the extension direction of each set of the heat dissipation holes (431) is parallel to corresponding side wall of the second plate (43).

5. The battery charging chamber (1) according to claim 1, wherein at least one receiving recess (33) is concaved from an upper surface of the chassis (32) toward a bottom of the first casing (31).

6. The battery charging chamber (1) according to claim 5, wherein the box (3) further comprise an input terminal (34) disposed on the chassis (32) for connecting and receiving an AC power provided by an external wire.

7. The battery charging chamber (1) according to claim 5, wherein the box (3) further comprises a control panel (38) disposed on the chassis (32) and comprising a monitor (381) and a human machine interface circuit (382), wherein the monitor (381) shows a state of the battery charging chamber (1) or a state of the battery (2), and the human machine interface circuit (382) is used to control the battery (2) by a user.

8. The battery charging chamber (1) according to claim 1, wherein the box (3) further comprises a DC/DC conversion module (37) disposed in the first accommodation space (311) of the first casing (31), and the DC/DC conversion module (37) is adjacent to at least one receiving recess (33) to connect the battery (2) disposed in the receiving recess (33) to transmit an electric power to the battery (2).

9. The battery charging chamber (1) according to claim 1, wherein the box (3) further comprises an AC circuit board (35) disposed in the first accommodation space (311) of the first casing (31), and the AC circuit board (35) is a control circuit board with USB Type-C connection functionality.
